# FASCICULE DE BREVET EUROPEEN

(11) **EP 2 720 199 B1**
(45) Date de publication et mention de la délivrance du brevet: **16.09.2015**
(21) Numéro de dépôt: 13188009.8
(22) Date de dépôt: 10.10.2013
(51) Int. Cl.: G07C 9/00, H04L 9/08, H04L 9/14

(54) **Procédé sécurisé de commande d'ouverture de dispositifs de serrure à partir de messages mettant en oeuvre un cryptage symétrique**
Gesichertes Steuerungsverfahren zum Öffnen von Verschlussvorrichtungen mit Hilfe von Meldungen, die eine symmetrische Verschlüsselung auslösen
Secured method for controlling the opening of locking devices by means of messages using symmetric encryption

(30) Priorité: 11.10.2012 FR 1259694
(43) Date de publication de la demande: 16.04.2014
(73) Titulaire: Openways Sas, 78100 Saint-Germaine en Laye (FR)
(72) Inventeur: Agueda, Aitor, 64700 Hendaye (FR); Metivier, Pascal, 78100 Saint-Germain en Laye (FR)
(74) Mandataire: Dupuis-Latour, Dominique

(56) Documents cités:
- EP-A1- 2 500 872
- FR-A1- 2 876 858
- US-A- 4 281 215
- US-A- 6 125 185

## Description

L'invention concerne les dispositifs de serrure commandés électriquement au moyen d'une clé dématérialisée et chiffrée, cette clé pouvant être véhiculée par un objet portatif détenu par l'utilisateur tel qu'un téléphone portable, un badge ou une carte sans contact, etc.

Par "dispositif de serrure" on entendra non seulement une serrure *stricto sensu,* c'est-à-dire un mécanisme posé par exemple sur une porte pour en condamner l'ouverture, mais également tout dispositif permettant d'aboutir à un résultat comparable, par exemple un canon de serrure considéré isolément, ou un dispositif de verrouillage plus spécifique comprenant divers organes non regroupés dans un même coffre de serrure, le but ultime étant d'obtenir la condamnation par des moyens mécaniques de l'accès physique à un lieu ou espace donné, et l'accès à ce lieu ou espace par déverrouillage du dispositif de serrure, sur commande d'un utilisateur, après vérification que cet utilisateur dispose bien des droits d'accès i) qui lui sont propres et ii) qui sont propres au dispositif de serrure. Le dispositif de serrure peut également comprendre, ou être associé à, un système d'alarme qu'il s'agit de désactiver pour permettre l'accès à un espace donné, ou inversement d'activer pour protéger cet espace avant ou après l'avoir quitté. Pour la simplicité de la description, on parlera par la suite simplement de "serrure", mais ce terme doit être entendu dans son sens le plus large, sans aucun caractère restrictif à un type d'équipement particulier.

L'objet portatif, lorsqu'il est approché de la serrure, joue le rôle d'une clé permettant d'en commander l'ouverture. On connait de nombreux systèmes permettant de coupler l'objet portatif à la serrure par voie galvanique (carte à puce à contacts) ou non galvanique (objet portatif à couplage inductif ou carte de type RFID). Ce couplage assure entre serrure et badge une communication permettant notamment à la serrure de lire dans la mémoire du badge la donnée d'accréditation afin de commander l'ouverture si cette donnée est reconnue conforme.

On peut également utiliser à la place d'un badge dédié un téléphone mobile, ce qui permet par mise en communication avec un site gestionnaire de procéder aisément à des vérifications en ligne, de modifier les éléments de sécurité ou d'en télécharger de nouveaux, etc.

Le EP 2 282 297 A1 (Openways SAS) propose une technique utilisable avec n'importe quel téléphone mobile conventionnel, reposant sur l'utilisation d'accréditations acoustiques chiffrées CAC (*Crypto Acoustic Credential*) en forme de signaux audio à usage unique, par exemple constituées d'une succession de tonalités doubles DTMF. Ces accréditations acoustiques sont générées par un site distant sécurisé et transmises au téléphone par des canaux de transmission téléphonique habituels (voix ou données), via l'opérateur de téléphonie mobile MNO (*Mobile Network Operator*) et un fournisseur de services de confiance TSM (*Trusted Service Manager*). Pour utiliser l'accréditation, l'utilisateur approche son téléphone de la serrure et déclenche l'émission par le haut-parleur de son téléphone de la série de tonalités correspondant à l'accréditation, de manière que ces tonalités puissent être captées par un microphone incorporé ou couplé à la serrure. Cette dernière décode l'accréditation, la vérifie et en cas de conformité déverrouille les organes mécaniques.

Le EP 2 306 407 A1 (Openways SAS) décrit une variante de la technique précédente, consistant à utiliser les accréditations originelles propres au fabricant de la serrure, sous forme de données numériques DDC (*Digital Data Credential*) avec leur contenu et leur format propre, en les convertissant en accréditations acoustiques CAC. En termes imagés, le moteur cryptographique du site sécurisé crée une "enveloppe" acoustique dans laquelle est "glissée" l'accréditation DDC préexistante, et ceci indépendamment du contenu de cette dernière car le moteur cryptographique n'a pas besoin de connaitre la définition des champs, le codage, etc., de l'accréditation DDC. Mais le fait que le fabricant/gestionnaire de la serrure génère toutes les accréditations numériques DDC assure une identification sécurisée des utilisateurs habilités.

L'accréditation acoustique CAC générée de cette manière est transmise au téléphone mobile pour être reproduite par ce dernier devant la serrure. La serrure opère une conversion inverse pour restituer l'accréditation DDC originelle à partir de l'accréditation acoustique CAC détectée et analysée. En d'autres termes, le module acoustique de la serrure "ouvre l'enveloppe" (l'accréditation acoustique CAC) pour en extraire, intactes, les informations numériques DDC qui avaient été auparavant placées dans cette enveloppe par le moteur cryptographique du site distant, le tout sans modifier le contenu de l'accréditation DDC.

Le EP 2 500 872 A1 (Openways SAS) décrit un perfectionnement de cette technique, consistant à faire en sorte que l'accréditation numérique, qui permet de déverrouiller la serrure, ne se situe plus dans l"'enveloppe" mais dans un module d'interfaçage de lecture couplé à la serrure, par exemple dans le micrologiciel (*firmware*) de ce module. De ce fait, il n'est plus nécessaire d'interfacer l'objet portatif (téléphone portable ou autre) avec la source tierce, et plus besoin de mettre un contenu dans l'enveloppe. Celle-ci pourra être "vide", c'est-à-dire qu'elle ne contiendra pas de clé de partie tierce telle qu'une accréditation numérique de type DDC comme dans le système antérieur. Le module d'interfaçage de lecture vérifie seulement la conformité de l'enveloppe en tant que telle, et transmet à la serrure proprement dite l'accréditation (conservée dans une mémoire du module) permettant de commander le déverrouillage de la serrure. Le contrôle de conformité de l'enveloppe est mis en oeuvre à partir de données contenues dans un champ de celle-ci, dont la valeur est comparée à une référence interne, telle qu'un compteur, du module d'interfaçage.

En tout état de cause, et à la différence des systèmes conventionnels à badge ou à clé, dans une telle technique il ne s'agit pas d'empêcher la duplication d'une enveloppe, mais seulement de rendre inopérante une enveloppe dupliquée. Ceci permet en particulier d'utiliser des technologies de couplage non sécurisées, simples et sures, entre l'objet portatif (téléphone portable ou autre) et le module d'interfaçage de lecture (intégré à la serrure).

La technique décrite dans ce document et dans les précédents peut être mise en oeuvre de deux manières :
- par un premier mode "en ligne" et en temps réel, avec un échange de données bidirectionnel, immédiat et direct, entre le téléphone et le site gestionnaire (via le tiers de confiance et l'opérateur de téléphonie mobile) au moment de l'utilisation, c'est-à-dire au moment où l'ouverture de la serrure est demandée par l'utilisateur ;
- par un second mode "hors ligne", mis en oeuvre notamment si l'accès au réseau n'est pas possible au moment de l'utilisation ; ce second mode implique un téléchargement préalable de données du site gestionnaire au téléphone et le stockage de ces données dans une mémoire de ce dernier pour utilisation ultérieure, différée.

Le premier mode permet de vérifier en temps réel que le téléphone appartient bien à un utilisateur autorisé, avec vérification immédiate d'une "liste noire" d'utilisateurs. Il est également possible, dans la mesure où l'on dispose d'une communication bidirectionnelle, de recueillir au niveau du site gestionnaire un grand nombre d'informations sur l'utilisation faite du message enveloppe : date et heure d'utilisation, situation géographique de l'utilisateur, confirmation de l'ouverture effective, diverses informations de gestion internes à la serrure, etc.

En revanche, en mode "hors ligne" ces fonctionnalités ne sont pas disponibles. Le téléphone doit se connecter à l'avance au site gestionnaire pour télécharger un nombre prédéterminé de messages enveloppes qui sont stockés dans le téléphone. Au moment de l'utilisation, l'utilisateur lance une application intégrée à son téléphone qui recherche le premier message enveloppe parmi ceux qui ont été stockés, le transmet au module d'interfaçage avec la serrure, puis le supprime de la mémoire, et ainsi de suite pour les messages suivants.

Dans un tel contexte de fonctionnement hors ligne et en différé, il est impératif d'assurer une sécurité maximale des transmissions de données du site gestionnaire au téléphone portable pour éviter tout risque lié à des possibles interceptions des communications ou duplication non autorisée des messages. Le téléphone jouant en mode hors ligne un rôle de stockage intermédiaire autonome, il est en effet possible de lire le contenu de sa mémoire et de dupliquer ou altérer ce contenu pour tenter une manoeuvre frauduleuse.

Plus précisément, il convient de sécuriser des transmissions de données dans un système de commande de serrures répondant aux contraintes suivantes :
- multidiffusion de données depuis le site gestionnaire vers un grand nombre de serrures gérées simultanément par ce site ;
- gestion des serrures techniquement simple, notamment par partage de clés cryptographiques communes, ce qui suppose l'emploi d'une technique de cryptage/décryptage symétrique avec clé cryptographique commune mémorisée à la fois côté site gestionnaire et côté serrure(s) ; - entre le site gestionnaire et les serrures, communication unidirectionnelle présentant les caractéristiques suivantes :

- fonctionnement en mode hors ligne avec stockage temporaire des données dans un élément intermédiaire du réseau (le téléphone), introduisant de ce fait un retard, *a priori* indéterminé, dans la retransmission de ces informations vers les serrures ;
- stockage intermédiaire opéré au sein d'organes aisément accessibles (les téléphones), ce qui nécessite que ces informations aient été préalablement cryptées par le site gestionnaire et transitent toujours sous forme cryptée sur les canaux de transmission, le décryptage n'intervenant qu'en bout de chaine, dans un module sécurisé de la serrure ;
- les serrures, qui constituent les terminaisons du réseau, ne comportant que des moyens récepteurs de données, sans réémission possible (ou nécessaire) d'informations en retour vers le site gestionnaire.

Dans un contexte différent, à savoir la sécurisation des éléments cryptographiques d'un système de télévision à péage, le FR 2 876 858 A1 décrit une technique de diversification des clés mettant en oeuvre des listes de clés mémorisées à la fois côté émetteur (au cryptage) et côté récepteur (au décryptage) avec sélection de la clé appropriée en fonction d'un simple identifiant de clé transmis avec le flux video.

La présente invention a pour objet une technique permettant, dans une application à des dispositifs de serrure, de diversifier dynamiquement les clés de cryptage, au moyen notamment de listes de clés mémorisées dans le dispositif de serrure.

Si l'on veut garantir sur le long terme une sécurité maximale, une telle manière de procéder nécessite cependant de modifier ces listes en changeant régulièrement les clés utilisées, de la même manière qu'il convient de modifier régulièrement le mot de passe d'un système de contrôle d'accès.

Le problème de l'invention est donc de définir une procédure de mise à jour de la liste de clés mémorisée dans le module sécurisé du dispositif de serrure, par substitution et/ou ajout de nouvelles clés dans cette liste, cette procédure étant déclenchée et contrôlée automatiquement depuis le site gestionnaire.

Plus précisément, le problème de l'invention consiste à faire en sorte que cette procédure de mise à jour, qui est destinée à préserver sur le long terme le degré élevé de sécurité du système, ne puisse introduire dans celui-ci une faille de sécurité.

Pour cela, l'invention propose un procédé sécurisé de commande d'ouverture de dispositifs de serrure tel que celui divulgué par le EP 2 500 872 A1 précité, c'est-à-dire comportant les étapes suivantes :
a) par un site gestionnaire :
   a1) génération d'une donnée numérique ;
   a2) cryptage, selon une méthode symétrique, d'un champ contenant la donnée numérique, par un algorithme de cryptage et avec une clé de cryptage ; et
   a3) génération d'un message contenant le champ crypté ;
b) transmission du message, via un réseau de communication, vers un dispositif portable détenu par un utilisateur et stockage de ce message dans une mémoire du dispositif portable ;
c) transmission du message, par une technique de transmission à courte portée, depuis le dispositif portable vers un module sécurisé générateur d'accréditations numériques couplé à un dispositif de serrure ;
d) par le module sécurisé générateur d'accréditations numériques, analyse du message par :
   d1) décryptage, selon ladite méthode symétrique, du champ crypté ;
   d2) vérification de la conformité du message avec une référence interne mémorisée dans le module sécurisé ; et
   d3) en cas de message avéré conforme à l'étape d2), génération par le module sécurisé d'une accréditation numérique propre à commander le déverrouillage du dispositif de serrure sur reconnaissance de la conformité de cette accréditation.

De façon propre à l'invention :
- le cryptage et le décryptage utilisent une clé commune mémorisée à la fois par le site gestionnaire et par le module sécurisé, le site gestionnaire et le module sécurisé mémorisant chacun une liste correspondante desdites clés communes ;
- pour le cryptage de l'étape a2), le site gestionnaire opère une sélection préalable d'une clé parmi ladite liste de clés mémorisées par le site gestionnaire ;
- le message généré à l'étape a3) contient en outre un identifiant de clé de cryptage, identifiant la clé utilisée pour le cryptage de l'étape a2), et
- l'étape d) comprend une étape de lecture préalable de l'identifiant de clé de cryptage, et le décryptage de l'étape d1) est opéré avec la clé identifiée par ladite lecture, sélectionnée parmi ladite liste de clés mémorisées par le module sécurisé.

De façon caractéristique de l'invention, le procédé comprend une procédure de mise à jour, par substitution et/ou ajout de nouvelles clés, de ladite liste de clés mémorisées dans une mémoire du module sécurisé, procédure dans laquelle :
- lors de la génération d'un message, le site gestionnaire encapsule dans le champ crypté de ce message :
   i) les nouvelles clés, ou
   ii) un identifiant d'une fonction modificative sélectionnée parmi plusieurs fonctions modificatives aptes à permettre le calcul des nouvelles clés ;
- le message est transmis au module sécurisé destinataire des nouvelles clés via un dispositif portable lors d'un déverrouillage, par ce dispositif portable, de la serrure couplée à ce module sécurisé destinataire ; et
- sur réception de ce message, le module sécurisé :
   i) met à jour les clés mémorisées dans la mémoire du module sécurisé ou, respectivement,
   ii) recalcule les nouvelles clés sur la base de l'identifiant de fonction modificative reçu, et met à jour les clés mémorisées dans la mémoire du module sécurisé avec les clés ainsi recalculées.

Le code logiciel desdites fonctions modificatives est avantageusement mémorisé dans un micrologiciel du module sécurisé.

De préférence, la sélection par le site gestionnaire d'une clé parmi ladite liste de clés mémorisée est une sélection pseudoaléatoire.

L'identifiant de clé de cryptage peut être contenu dans un champ non crypté du message, ou crypté selon un mode prédéterminé, connu du module sécurisé.

Dans une forme préférentielle de réalisation :
- le site gestionnaire et le module sécurisé mémorisent chacun une pluralité correspondante d'algorithmes de cryptage ;
- pour le cryptage de l'étape a2), le site gestionnaire opère une sélection préalable d'un algorithme parmi ladite pluralité d'algorithmes mémorisés par le site gestionnaire ;
- le message généré à l'étape a3) contient en outre un identifiant d'algorithme de cryptage, identifiant l'algorithme utilisé pour le cryptage de l'étape a2), et
- l'étape d) comprend une étape de lecture préalable de l'identifiant de l'algorithme, et le décryptage de l'étape d1) est opéré avec l'algorithme identifié par ladite lecture, sélectionné parmi ladite pluralité d'algorithmes mémorisés par le module sécurisé.

L'identifiant d'algorithme de cryptage est de préférence contenu dans un champ non crypté du message, ou crypté selon un mode prédéterminé, connu du module sécurisé.

Dans tous les cas, il est préférable d'associer une date d'expiration à chaque clé de cryptage, une procédure de mise à jour étant initiée automatiquement par le site gestionnaire au moins pour cette clé de cryptage avant ladite date d'expiration.

Selon un autre aspect de l'invention, il est en outre prévu des étapes de génération par le site gestionnaire, pour un dispositif portable spécifique, d'un paquet comprenant une pluralité desdits messages, transmission de ce paquet à ce dispositif portable, et stockage du paquet dans une mémoire du dispositif portable. Les messages compris dans un même paquet sont tous différents et contiennent chacun un identifiant d'un dispositif de serrure dont l'ouverture est autorisée par ledit dispositif portable spécifique, et un marqueur de séquencement associé à ce dispositif de serrure. L'analyse de l'étape d) comprend alors une vérification de ce que le message transmis au module sécurisé par le dispositif portable correspond bien au dispositif de serrure effectivement couplé à ce module sécurisé, et de la cohérence du marqueur de séquencement contenu dans ce message avec un numéro de séquence mémorisé dans le module sécurisé et constituant ladite référence interne.

Dans ce dernier cas, il est possible de prévoir en outre, en cas de message avéré conforme à l'étape d2), une étape de mise à jour du numéro de séquence mémorisé dans le module sécurisé, en fonction du marqueur de séquencement contenu dans le message reçu, et/ou, si une précédente habilitation relative à un utilisateur antérieur est stockée dans le module sécurisé, d'invalidation de cette habilitation.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

La Figure 1 est une représentation schématique des différents éléments impliqués dans la mise en oeuvre de l'invention.

La Figure 2 illustre la structure du bloc de données utilisé par le procédé de l'invention.

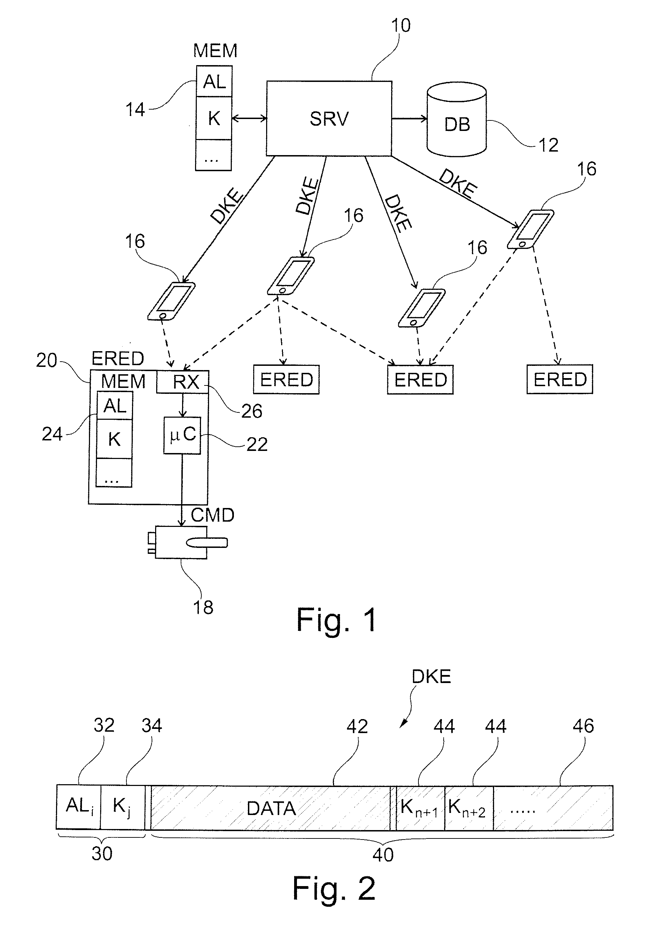

Sur la Figure 1, on a représenté de façon schématique les divers éléments du système selon l'invention, qui est d'un type comparable à celui décrit dans le EP 2 500 872 A1 précité, auquel on pourra se référer pour de plus amples détails.

Un site gestionnaire ou serveur central 10 génère des messages ci-après désignés DKE (*Digital Key Envelope*) au moyen d'un logiciel applicatif à partir d'une part de données contenues dans une base de données d'utilisateurs et de serrures 12 et d'autre part d'algorithmes et de clés de cryptage conservés dans une mémoire 14. Les messages DKE sont transmis à des dispositifs de communication 16, typiquement constitués par des téléphones portables à disposition des différents utilisateurs enregistrés par le site gestionnaire, par l'intermédiaire d'un opérateur de réseau mobile (MNO) et d'un site gestionnaire de confiance (TSM), selon des techniques en elles-mêmes bien connues et qui ne seront pas décrites en détail.

Les messages DKE sont destinés à permettre l'ouverture d'un dispositif de serrure 18. Pour cela, le message DKE téléchargé et mémorisé dans le téléphone 16 est transmis à un module sécurisé 20 dénommé ERED (*Envelope Reading Electronic Device*) faisant partie du dispositif de serrure 18.

Le couplage entre le téléphone 16 et le module sécurisé 20 peut être opéré par diverses techniques en elles-mêmes bien connues telles que transmission acoustique, couplage inductif de type NFC (notamment en mode *peer-to-peer*), couplage *Bluetooth*, autre couplage radiofréquence, couplage infrarouge, lumineux, par vibrations, etc. ce couplage n'ayant aucunement besoin d'être sécurisé.

Le module sécurisé 20 met en oeuvre un microcontrôleur 22 et un circuit de réception 26 propre à recevoir le message DKE qui lui est transmis par l'un des modes de couplage évoqués plus haut. Le module 20 comporte également une mémoire 24 permettant en particulier de gérer les différentes opérations de décryptage du message DKE reçu, cette mémoire conservant notamment une série de clés de cryptage ainsi que du code logiciel correspondant à divers algorithmes de décryptage.

Lorsqu'il reçoit un message, le module 20 vérifie l'intégrité et la validité de ce message et génère une accréditation numérique CMD permettant notamment de déverrouiller la serrure 18, et/ou toute autre action utile à la gestion de celle-ci, par exemple une commande de révocation d'une autorisation donnée à un utilisateur antérieur (cas typique des serrures de chambres d'hôtel).

### Fonctionnement général du système

La Figure 2 illustre la structure de base d'un message DKE. Celui-ci comporte deux zones 30 et 40, avec :
- une zone non cryptée 30 (ou cryptée avec une méthode connue à l'avance), qui contient un champ 32 avec un indicateur *ALᵢ* de méthode de cryptage faisant référence à un algorithme particulier utilisé pour crypter la zone 40, et un champ 34 contenant la clé *Kⱼ* utilisée spécifiquement, avec cet algorithme *ALᵢ*, pour crypter la zone 40 ;
- une zone 40 cryptée, qui contient dans un champ 42 des données DATA et éventuellement, dans des champs annexes 44, 46, d'autres données utilisées non pas pour la commande de déverrouillage de la serrure, mais pour d'autres opérations, par exemple de maintenance ou de mise à jour des informations mémorisées dans le dispositif de serrure.

Les méthodes de cryptage utilisées sont des méthodes de cryptage symétrique qui peuvent être aussi bien des méthodes connues telles que AES, 3DES, etc. que des méthodes "propriétaire" spécifiques au concepteur du système.

La méthode de cryptage (algorithme *ALᵢ*) utilisée pour crypter la zone 40 est modifiée et choisie parmi une pluralité de méthodes, ce choix étant effectué à chaque génération d'un message DKE par le site gestionnaire 10, par exemple selon un tirage pseudoaléatoire. Il s'agit de rendre imprévisible la détermination de la méthode de cryptage qui sera choisie.

De façon comparable, non seulement la méthode de cryptage est modifiée à chaque génération d'un message DKE, mais la clé de cryptage est également modifiée, ici encore par tirage pseudoaléatoire parmi une liste de clés conservées dans la mémoire 14 du site gestionnaire.

Ces deux sélections (algorithme et clé) sont combinées de manière imprévisible (aléatoire ou non) pour que la combinaison algorithme/clé prenne le plus grand nombre possible de valeurs, avec pour résultat que le nombre total de cryptages possibles est égal au nombre de méthodes de cryptage multiplié par le nombre de clés disponibles pour chaque méthode.

Les divers algorithmes et les diverses clés sont conservés en mémoire à la fois au niveau du site gestionnaire 10 (mémoire 14) et de chaque module sécurisé 20 (mémoire 24).

La clé cryptographique utilisée peut être une même clé pour l'ensemble des serrures d'un site, ou bien une clé différente pour chaque serrure. Dans ce dernier cas, la sécurité d'ensemble du système est accrue du fait du caractère unique de la clé cryptographique, qui outre le serveur du site gestionnaire, n'est mémorisée qu'en un seul emplacement du côté des dispositifs de serrure.

Lorsque le module 20 reçoit un message DKE, il lit dans le champ 30 i) l'indicateur *ALᵢ* identifiant la méthode de cryptage utilisée et ii) la clé de cryptage *Kⱼ*, il sélectionne parmi plusieurs algorithmes celui correspondant à la méthode lue dans le message DKE, il applique à cet algorithme la clé lue, et il décrypte la zone 40 de manière à délivrer en clair le champ de données DATA et les champs auxiliaires éventuellement contenus dans cette zone cryptée.

### Mise à jour et diffusion des clés de cryptage

Les diverses clés de cryptage utilisées sont implantées dans la mémoire 24 de chaque module sécurisé au cours d'une procédure d'initialisation.

Pour accroitre la sécurité, ces clés doivent être périodiquement modifiées. Pour éviter de réitérer l'initialisation qui est un processus assez lourd à mettre en oeuvre (il nécessite de déplacer un opérateur à proximité de chacune des serrures), l'invention propose d'utiliser les messages DKE transmis au moment des ouvertures de serrures par les utilisateurs pour diffuser à cette occasion de nouvelles clés de cryptage, sans mettre en oeuvre de processus de réinitialisation des serrures.

Pour cela, les nouvelles clés *Kₙ₊₁, Kₙ₊₂...* sont incluses dans les champs auxiliaires 44 de la zone cryptée 40 des messages DKE générés par le site gestionnaire 10 et diffusés aux téléphones 16.

Lors d'une commande d'ouverture par un utilisateur, après décryptage du message DKE, le module sécurisé 20 utilise les nouvelles clés ainsi transmises pour mettre à jour la liste de clés de cryptage contenues dans sa mémoire 24. Les nouvelles clés peuvent remplacer les clés existantes (substitution), ou s'ajouter à celles-ci, conduisant à un plus grand nombre encore de clés possibles avec une amélioration corrélative de la sécurité générale du système.

Les nouvelles clés peuvent être transmises directement, encapsulées telles quelles dans la zone cryptée 40 du message DKE.

En variante, elles peuvent être transmises de façon indirecte, en encapsulant dans la zone cryptée 40 non pas les clés elles-mêmes, mais un identifiant d'une fonction propre à modifier les clés déjà stockées dans la mémoire 24 du module sécurisé. Les nouvelles clés seront déduites des anciennes par une opération de la forme : *nouvelle clé* = *fₙ* (*ancienne clé*), plusieurs fonctions correspondantes de transformation *f₁, f₂, f₃*... étant implémentées dans le module sécurisé, de préférence dans le micrologiciel (*firmware*) plutôt qu'en mémoire vive.

Lorsqu'il reçoit le message DKE, après décryptage le module sécurisé 20 lit l'identifiant de la fonction particulière de transformation utilisée et applique celle-ci aux clés de la liste courante en mémoire, pour calculer de nouvelles clés qui viendront se substituer (ou s'ajouter) aux anciennes. Ce mode de propagation indirect des clés présente une sécurité accrue puisque les clés, même cryptées, ne sont pas transmises telles quelles. D'autre part, il réduit la longueur du message, car la longueur d'un identifiant de fonction de transformation est bien inférieure à celle d'une clé de cryptage proprement dite.

### Protection contre la duplication des messages

Les messages font l'objet d'une multidiffusion et transitent par des moyens de communication non sécurisés, et ils sont en outre stockés temporairement dans les mémoires des téléphones. La duplication d'un message ou sa reconstitution sont de ce fait relativement aisées, et il est donc indispensable de prévoir des moyens permettant de rendre inopérant un message frauduleusement dupliqué lorsque celui -ci est appliqué à un dispositif de serrure.

Cependant, comme le système opère hors ligne et de façon désynchronisée, il n'est pas possible de mettre en oeuvre des techniques basées sur un horodatage, et ce d'autant plus qu'il serait aisé de modifier l'horloge interne d'un téléphone pour réactiver la validité d'un message donné.

Dans le cas de l'invention, le système met en oeuvre un contrôle de conformité basé sur un compteur séquentiel, mis en oeuvre à partir de données contenues dans un champ de l'enveloppe, dont la valeur est comparée à un compteur interne du module d'interfaçage.

Plus précisément, lors de l'envoi des messages aux téléphones, ces messages sont groupés en paquets, un paquet étant destiné à une serrure donnée et étant unique pour celle-ci.

Chaque paquet contient une série de messages (une série de DKE) correspondant spécifiquement à cette serrure. Chaque message possède une validité unique, grâce à un numéro de séquence associé à chaque serrure.

Un tel paquet peut par exemple être constitué par les données du Tableau 1 suivant, sous forme d'une matrice où chaque colonne correspond à un paquet envoyé au téléphone, et la notation *"Ey seq x"* signifie "le numéro de séquence *x* pour la serrure *y*", cette donnée étant incluse dans le champ DATA de la zone cryptée 40 du message DKE.

**Tableau 1**

| | Nombre de fois où la serrure *Ey* peut être ouverte : *seq 1* ... *seq n* ***P*** : pointeur sur le numéro de séquence courant (*seq* x) pour la serrure *Ey* (un pointeur par ligne de la matrice) | | | | | |
|---|---|---|---|---|---|---|
| | | | | | | |
| | *P*: ↓ → ↓ → ↓ → ↓ → ↓ ... ↓ | | | | | |
| Serrures accessibles avec le téléphone : *E1... Em* | *E1 seq1* | *E1 seq2* | *E1 seq3* | ....... | ....... | *E1 seq n* |
| | *E2 seq1* | *E2 seq 2* | ..... | | | ..... |
| | *E3 seq1* | ..... | ..... | | | ..... |
| | ..... | | | | | ..... |
| | ..... | | | | | ...... |
| | *Em seq1* | *Em seq2* | | | | *Em seq n* |

Toutefois, dans la mesure où plusieurs téléphones peuvent commander plusieurs serrures, les séquences utilisées ne peuvent pas être simplement consécutives. Dans ce cas, on adjoint au numéro de séquence *x* un préfixe correspondant à un identifiant ou à un numéro de séquence propre au téléphone : pour un téléphone donné, ce préfixe constituera une constante, alors que le numéro de séquence *x* sera incrémenté d'une unité à chaque message successif du paquet envoyé à ce téléphone. En d'autres termes, l'identifiant du téléphone jouera un rôle de décalage ou *offset* pour la séquence.

Le Tableau 2 ci-après donne un exemple de paquet de messages ainsi constitué :

**Tableau 2**

| | Téléphone n° 0 | Téléphone n° 1 | Téléphone n° 2 | Téléphone n° N |
|---|---|---|---|---|
| Valeur de x pour une serrure donnée | 0000 | 1 000 | 2 000 | N 000 |
| | 0001 | 1 001 | 2001 | N 001 |
| | 0002 | 1 002 | 2002 | N 002 |
| | .... | ... | ... | ... |
| | 0999 | 1 999 | 2999 | N 999 |

Par ailleurs, lors de la génération du message le site gestionnaire lui incorpore une date d'expiration, afin d'en limiter la validité dans le temps. Après décryptage du message par le module 20, cette date d'expiration est comparée à la date et à l'heure courantes de l'horloge temps réel du module, pour verifier que le message n'est pas périmé.

La plage de valeurs de séquences possibles pour un téléphone donné ('000' à '999' dans l'exemple du Tableau 2 ci-dessus) devra être suffisamment large pour ne pas refermer la boucle - dans cet exemple, depuis la dernière valeur '999' à la première valeur '000' - avant la date d'expiration, ce qui sinon aurait pour effet de réactiver des messages avec des séquences anciennes.

À chaque commande d'ouverture d'une serrure, les séquences nouvelles périment les précédentes. Plus précisément, le procédé opère de la manière suivante :
- au moment du couplage avec le module sécurisé, le téléphone recueille l'identifiant *y* de la serrure ;
- le téléphone sélectionne ensuite dans la matrice mémorisée la ligne correspondant à cette serrure *Ey*, parmi les différentes serrures *E1* à *Em ;*
- le téléphone envoie au module la donnée *Ey seq x* correspondant à la position courante du pointeur *P* puis, pour la ligne qui avait été sélectionnée (celle correspondant à la serrure *Ey*), décale d'une unité la position de ce pointeur. Si le pointeur se trouvait à la dernière position de la ligne, un message est affiché à l'utilisateur pour lui indiquer qu'il doit se reconnecter au site gestionnaire pour obtenir de nouveaux messages pour pouvoir générer d'autres commandes pour cette même serrure ;
- pour être considéré comme conforme par le module, le message reçu d'un téléphone donné doit présenter une valeur du numéro de séquence *seq x* supérieure à la valeur conservée en mémoire pour ce téléphone au sein du module.

Pour tenir compte du fait que plusieurs utilisateurs (c'est-à-dire plusieurs téléphones) peuvent être autorisés à faire fonctionner la même serrure, chaque serrure conserve en mémoire plusieurs séries de séquences, avec une série pour chaque téléphone ayant actionné la serrure et chacune de ces séries mémorisant la dernière valeur de la séquence. Incidemment, dans la mesure où la valeur de séquence correspondant à un téléphone tient dans quelques octets seulement, cette multiplication des séries de séquences ne pose pas de difficulté particulière compte tenu des capacités de mémoire disponibles dans les serrures.

### Initialisation du système

Dans leur état initial, les dispositifs de serrure ne contiennent pas les informations et données permettant d'assurer le décryptage et la vérification des messages.

Il est de ce fait nécessaire d'y accéder une première fois et d'appliquer une commande d'initialisation spécifique. Cette commande d'initialisation est cryptée avec une clé de transport provisoire, incorporée au micrologiciel. Une fois obtenu l'accès à la mémoire 20, les algorithmes de cryptage et les clés y sont inscrits puis la clé de transport est désactivée. Le dispositif de serrure est alors totalement fonctionnel, prêt à opérer conformément au processus exposé plus haut.

Lors de l'initialisation, outre les clés, diverses informations de service sont chargées dans la mémoire telles que numéro de chambre ou numéro de porte, mise à l'heure de l'horloge temps réel interne, etc.

Une fois les clés initiales chargées dans une serrure, elles pourront être modifiées plus ou moins fréquemment, avant leur date d'expiration, par le processus de substitution ou d'ajout de nouvelles clés décrit plus haut, à l'occasion d'une manoeuvre d'ouverture par un téléphone d'un utilisateur et sans intervention locale d'un opérateur.

Cette technique permet notamment d'éviter une gestion très lourde de dispositifs de serrures autonomes. Ces derniers ne nécessitent ainsi qu'une seule intervention sur place, pour l'implantation des clés initiales, avec mise à jour régulière via les téléphones des utilisateurs au moment des commandes d'ouverture.

## Revendications

1. Un procédé sécurisé de commande d'ouverture de dispositifs de serrure, comportant les étapes suivantes :
a) par un site gestionnaire (10) :
a1) génération d'une donnée numérique (DATA) ;
a2) cryptage, selon une méthode symétrique, d'un champ (40) contenant ladite donnée numérique, par un algorithme de cryptage et avec une clé de cryptage ; et
a3) génération d'un message (DKE) contenant ledit champ crypté ;
b) transmission du message, via un réseau de communication, vers un dispositif portable (16) détenu par un utilisateur et stockage de ce message dans une mémoire du dispositif portable ;
c) transmission du message, par une technique de transmission à courte portée, depuis le dispositif portable (16) vers un module sécurisé (20) générateur d'accréditations numériques couplé à un dispositif de serrure (18) ;
d) par le module sécurisé (20) générateur d'accréditations numériques, analyse du message par :
d1) décryptage, selon ladite méthode symétrique, du champ crypté (40) ;
d2) vérification de la conformité du message avec une référence interne mémorisée dans le module sécurisé ; et
d3) en cas de message avéré conforme à l'étape d2), génération par le module sécurisé d'une accréditation numérique propre à commander le déverrouillage du dispositif de serrure sur reconnaissance de la conformité de cette accréditation,
*procédé **caractérisé en ce que*** :
- ledit cryptage et ledit décryptage utilisent une clé commune mémorisée à la fois par le site gestionnaire et par le module sécurisé, le site gestionnaire (10) et le module sécurisé (20) mémorisant chacun (14, 24) une liste correspondante desdites clés communes ;
- pour le cryptage de l'étape a2), le site gestionnaire opère une sélection préalable d'une clé parmi ladite liste de clés mémorisées par le site gestionnaire ;
- le message généré à l'étape a3) contient en outre un identifiant de clé de cryptage (Kⱼ), identifiant la clé utilisée pour le cryptage de l'étape a2), et
- l'étape d) comprend une étape de lecture préalable de l'identifiant de clé de cryptage, et le décryptage de l'étape d1) est opéré avec la clé identifiée par ladite lecture, sélectionnée parmi ladite liste de clés mémorisées par le module sécurisé,
*le procédé étant également **caractérisé en ce qu'**il* comprend en outre une procédure de mise à jour, par substitution et/ou ajout de nouvelles clés, de ladite liste de clés mémorisées dans une mémoire du module sécurisé, procédure dans laquelle :
- lors de la génération d'un message (DKE), le site gestionnaire encapsule dans le champ crypté (40) de ce message :
i) les nouvelles clés (Kₙ₊₁, Kₙ₊₂ ...), ou
ii) un identifiant d'une fonction modificative sélectionnée parmi plusieurs fonctions modificatives aptes à permettre le calcul des nouvelles clés ;
- le message est transmis au module sécurisé destinataire des nouvelles clés via un dispositif portable lors d'un déverrouillage, par ce dispositif portable, de la serrure couplée à ce module sécurisé destinataire ; et
- sur réception de ce message, le module sécurisé :
i) met à jour les clés mémorisées dans la mémoire du module sécurisé ou, respectivement,
ii) recalcule les nouvelles clés sur la base de l'identifiant de fonction modificative reçu, et met à jour les clés mémorisées dans la mémoire du module sécurisé avec les clés ainsi recalculées.

2. Le procédé de la revendication 1, dans lequel le code logiciel desdites fonctions modificatives est mémorisé dans un micrologiciel du module sécurisé.

3. Le procédé de la revendication 1, dans lequel la sélection par le site gestionnaire d'une clé parmi ladite liste de clés mémorisée est une sélection pseudoaléatoire.

4. Le procédé de la revendication 1, dans lequel l'identifiant de clé de cryptage (Kⱼ) est contenu dans un champ non crypté (30) du message, ou crypté selon un mode prédéterminé, connu du module sécurisé.

5. Le procédé de la revendication 1, dans lequel :
- le site gestionnaire (10) et le module sécurisé (20) mémorisent chacun (14, 24) une pluralité correspondante d'algorithmes de cryptage ;
- pour le cryptage de l'étape a2), le site gestionnaire opère une sélection préalable d'un algorithme parmi ladite pluralité d'algorithmes mémorisés par le site gestionnaire ;
- le message généré à l'étape a3) contient en outre un identifiant d'algorithme de cryptage (ALᵢ), identifiant l'algorithme utilisé pour le cryptage de l'étape a2), et
- l'étape d) comprend une étape de lecture préalable de l'identifiant de l'algorithme, et le décryptage de l'étape d1) est opéré avec l'algorithme identifié par ladite lecture, sélectionné parmi ladite pluralité d'algorithmes mémorisés par le module sécurisé.

6. Le procédé de la revendication 5, dans lequel l'identifiant d'algorithme de cryptage (ALᵢ) est contenu dans un champ non crypté (30) du message, ou crypté selon un mode prédéterminé, connu du module sécurisé.

7. Le procédé de la revendication 1, dans lequel une date d'expiration est associée à chaque clé de cryptage, et une procédure de mise à jour est initiée automatiquement par le site gestionnaire au moins pour ladite clé de cryptage avant ladite date d'expiration.

8. Le procédé de la revendication 1, dans lequel :
- il est en outre prévu des étapes de :
• génération par le site gestionnaire, pour un dispositif portable spécifique, d'un paquet comprenant une pluralité desdits messages,
• transmission de ce paquet à ce dispositif portable, et
• stockage du paquet dans une mémoire du dispositif portable ;
- les messages compris dans un même paquet sont tous différents et contiennent chacun :
• un identifiant d'un dispositif de serrure dont l'ouverture est autorisée par ledit dispositif portable spécifique, et
• un marqueur de séquencement associé à ce dispositif de serrure, et
- l'analyse de l'étape d) comprend une vérification :
• de ce que le message transmis au module sécurisé par le dispositif portable correspond bien au dispositif de serrure effectivement couplé à ce module sécurisé, et
• de la cohérence du marqueur de séquencement contenu dans ce message avec un numéro de séquence mémorisé dans le module sécurisé et constituant ladite référence interne.

9. Le procédé de la revendication 8 comprenant en outre, en cas de message avéré conforme à l'étape d2), une étape de :
e) mise à jour du numéro de séquence mémorisé dans le module sécurisé, en fonction du marqueur de séquencement contenu dans le message reçu.

10. Le procédé de la revendication 8 comprenant en outre, en cas de message avéré conforme à l'étape d2), une étape de :
f) si une précédente habilitation relative à un utilisateur antérieur est stockée dans le module sécurisé, invalidation de cette habilitation.

## Patentansprüche

1. Gesichertes Steuerverfahren zum Öffnen von Schließvorrichtungen, das die folgenden Schritte umfasst:
a) durch eine Verwaltungsanlage (10):
a1) Erzeugen digitaler Daten (DATH);
a2) Verschlüsseln eines Feldes (40), das die digitale Dateneinheit enthält, gemäß einem symmetrischen Verfahren durch einen Verschlüsselungsalgorithmus und mit einem Verschlüsselungsschlüssel; und
a3) Erzeugen einer Nachricht (DKE), die das verschlüsselte Feld enthält;
b) Übertragen der Nachricht über ein Kommunikationsnetz zu einer tragbaren Vorrichtung (16), die ein Anwender besitzt, und Speichern dieser Nachricht in einem Speicher der tragbaren Vorrichtung;
c) Übertragen der Nachricht durch eine kurzreichweitige Übertragungstechnik von der tragbaren Vorrichtung (16) zu einem gesicherten Modul (20), das Generator für digitale Akreditierungen ist und mit einer Schließvorrichtung (18) gekoppelt ist;
d) durch das gesicherte Modul (20), das Generator für digitale Akreditierungen ist, Analysieren der Nachricht durch:
d1) Entschlüsseln des verschlüsselten Feldes (40) gemäß dem symmetrischen Verfahren;
d2) Verifizieren der Übereinstimmung der Nachricht mit einer in dem gesicherten Modul gespeicherten internen Referenz; und
d3) falls sich die Nachricht in Übereinstimmung mit dem Schritt d2) erweist, Erzeugen durch das gesicherte Modul einer digitalen Akreditierung, die die Entriegelung der Schließvorrichtung steuern kann, wenn die Übereinstimmung dieser Akreditierung erkannt wird,
wobei das Verfahren **dadurch gekennzeichnet ist, dass**:
- die Verschlüsselung und die Entschlüsselung einen gemeinsamen Schlüssel verwenden, der sowohl in der Verwaltungsanlage als auch in dem gesicherten Modul gespeichert ist, wobei die Verwaltungsanlage (10) und das gesicherte Modul (20) jeweils (14, 24) eine entsprechende Liste der gemeinsamen Schlüssel speichern; und
- für die Verschlüsselung des Schrittes a2) die Verwaltungsanlage eine vorhergehende Auswahl eines Schlüssels aus der Liste von Schlüsseln, die durch die Verwaltungsanlage gespeichert sind, vornimmt;
- die im Schritt a3) erzeugte Nachricht außerdem eine Kennung (Kⱼ) des Verschlüsselungsschlüssels enthält, die den für die Verschlüsselung des Schrittes a2) verwendeten Schlüssel identifiziert; und
- der Schritt d) einen Schritt des vorhergehenden Lesens der Kennung des Verschlüsselungsschlüssels umfasst und die Entschlüsselung des Schrittes d1) mit dem durch das Lesen identifizierten Schlüssel, der aus der Liste von Schlüsseln, die durch das gesicherte Modul gespeichert sind, ausgewählt wird, vorgenommen wird,
wobei das Verfahren auch **dadurch gekennzeichnet ist, dass** es außerdem eine Aktualisierungsprozedur durch Ersetzen und/oder Hinzufügen neuer Schlüssel aus der Liste von Schlüsseln, die in einem Speicher des gesicherten Moduls gespeichert sind, umfasst, wobei in der Prozedur:
- bei der Erzeugung einer Nachricht (DKE) die Verwaltungsanlage in das verschlüsselte Feld (40) dieser Nachricht Folgendes einkapselt:
i) die neuen Schlüssel (Kₙ₊₁, Kₙ₊₂, ...) oder
ii) eine Kennung einer modifizierenden Funktion, die aus mehreren modifizierenden Funktionen gewählt ist, die die Berechnung der neuen Schlüssel ermöglichen;
- die Nachricht an das gesicherte Zielmodul der neuen Schlüssel über eine tragbare Vorrichtung übertragen wird, wenn durch diese tragbare Vorrichtung das Schloss, das mit diesem gesicherten Zielmodul gekoppelt ist, entriegelt wird; und
- bei Empfang dieser Nachricht das gesicherte Modul:
i) die in dem Speicher des gesicherten Moduls gespeicherten Schlüssel aktualisiert bzw.
ii) die neuen Schlüssel anhand der Kennung der empfangenden modifizierenden Funktion erneut berechnet und die in dem Speicher des gesicherten Moduls gespeicherten Schlüssel mit den somit neu berechneten Schlüsseln aktualisiert.

2. Verfahren nach Anspruch 1, wobei der Software-Code der modifizierenden Funktionen in einer Mikrosoftware des gesicherten Moduls gespeichert ist.

3. Verfahren nach Anspruch 1, wobei die Auswahl durch die Verwaltungsanlage eines Schlüssels aus der gespeicherten Liste von Schlüsseln eine pseudozufällige Auswahl ist.

4. Verfahren nach Anspruch 1, wobei die Kennung (Kⱼ) des Verschlüsselungsschlüssels in einem nicht verschlüsselten Feld (30) der Nachricht oder in einem Feld, das gemäß einem dem gesicherten Modul bekannten vorgegebenen Modus verschlüsselt ist, enthalten ist.

5. Verfahren nach Anspruch 1, wobei:
- die Verwaltungsanlage (10) und das gesicherte Modul (20) jeweils (14, 24) eine entsprechende Mehrzahl von Verschlüsselungsalgorithmen speichern;
- für die Verschlüsselung des Schrittes a2) die Verwaltungsanlage eine vorherige Auswahl eines Algorithmus unter den durch die Verwaltungsanlage gespeicherten mehreren Algorithmen vornimmt;
- die Nachricht, die im Schritt a3) erzeugt wird, außerdem eine Kennung des Verschlüsselungsalgorithmus (ALi) enthält, die den für die Verschlüsselung des Schrittes a2) verwendeten Algorithmus identifiziert, und
- der Schritt d) einen Schritt des vorhergehenden Lesens der Kennung des Algorithmus umfasst und die Entschlüsselung des Schrittes d1) mit dem durch das Lesen identifizierten Algorithmus, der aus den von dem gesicherten Modul gespeicherten mehreren Algorithmen gewählt ist, vorgenommen wird.

6. Verfahren nach Anspruch 5, wobei die Kennung des Verschlüsselungsalgorithmus (ALi) in einem nicht verschlüsselten Feld (30) der Nachricht oder in einem Feld, das gemäß einem dem gesicherten Modul bekannten vorgegebenen Modus verschlüsselt ist, enthalten ist.

7. Verfahren nach Anspruch 1, wobei jedem Verschlüsselungsschlüssel ein Ablaufdatum zugeordnet ist und von der Verwaltungsanlage eine Aktualisierungsprozedur wenigstens für den Verschlüsselungsschlüssel vor dem Ablaufdatum automatisch eingeleitet wird.

8. Verfahren nach Anspruch 1, wobei:
- außerdem die folgenden Schritte vorgesehen sind:
• Erzeugen eines Pakets, das mehrere Nachrichten enthält, durch die Verwaltungsanlage für eine bestimmte tragbare Vorrichtung
• Übertragen dieses Pakets an diese tragbare Vorrichtung und
• Speichern des Pakets in einem Speicher der tragbaren Vorrichtung;
- die in einem Paket enthaltenen Nachrichten alle verschieden sind und jeweils enthalten:
• eine Kennung einer Schließvorrichtung, deren Öffnen durch die bestimmte tragbare Vorrichtung autorisiert wird, und
• eine Verlaufsmarkierung, die dieser Schließvorrichtung zugeordnet ist, und
- die Analyse des Schrittes d) eine Verifizierung umfasst:
• dass die an das von der tragbaren Vorrichtung an das gesicherte Modul übertragene Nachricht wirklich der Schließvorrichtung entspricht, die mit diesem gesicherten Modul effektiv gekoppelt ist, und
• dass die Verlaufsmarkierung, die in dieser Nachricht enthalten ist, mit einer Folgenummer, die in dem gesicherten Modul gespeichert ist und die interne Referenz bildet, kohärent ist.

9. Verfahren nach Anspruch 8, das außerdem in dem Fall, in dem sich die Nachricht in Übereinstimmung mit dem Schritt d2) erweist, den folgenden Schritt umfasst:
e) Aktualisieren der in dem gesicherten Modul gespeicherten Folgenummer als Funktion der Verlaufsmarkierung, die in der empfangenen Nachricht enthalten ist.

10. Verfahren nach Anspruch 8, das außerdem in dem Fall, in dem sich die Nachricht als konform mit dem Schritt d2) erweist, den folgenden Schritt umfasst:
f) falls eine vorhergehende Ermächtigung bezüglich des früheren Anwenders in dem gesicherten Modul gespeichert ist, Erklären dieser Ermächtigung für ungültig.

## Claims

1. A secured method for controlling the opening of lock devices, including the following steps:
a) by a management site (10):
a1) generation of digital data (DATA);
a2) encryption, according to a symmetrical method, of a field (40) containing said digital data, by an encryption algorithm and with an encryption key; and
a3) generation of a message (DKE) containing said encrypted field;
b) transmission of the message, via a communication network, to a portable device (16) held by a user and storage of this message in a memory of the portable device;
c) transmission of the message, by a technique of shortrange transmission, from the portable device (16) to a secured module (20) generator of digital accreditations coupled to a lock device (18);
d) by the secured module (20) generator of digital accreditations, analysis of the message by:
d1) decryption, according to said symmetrical method, of the encrypted field (40);
d2) checking of the compliance of the message with an internal reference memorized in the secured module; and
d3) in case of message recognized as compliant at step d2), generation by the secured module of a digital accreditation adapted to control the unlocking of the lock device upon recognition of the compliance of this accreditation,
the method being **characterized in that**:
- said encryption and said decryption use a common key memorized by both the management site and the secured module, the management site (10) and the secured module (20) each memorizing (14, 24) a corresponding list of said common keys;
- for the encryption of step a2), the management site operates a previous selection of a key from said list of keys memorized by the management site;
- the message generated at step a3) further contains an encryption key identifier (Kⱼ), identifying the key used for the encryption of step a2), and
- the step d) comprises a step of previous reading of the encryption key identifier, and the decryption of step d1) is operated with the key identified by said reading, selected from said list of key memorized by the secured module,
the method being also **characterized in that** it further comprises a process of updating, by substitution and/or addition of new keys, said list of keys memorized in a memory of the secured module,
process in which:
- during the generation of a message (DKE), the management site encapsulates in the encrypted field (40) of this message:
i) the new keys (Kₙ₊₁, Kₙ₊₂...), or
ii) an identifier of a modifying function selected from several modifying functions adapted to allow the calculation of the new keys;
- the message is transmitted to the secured module recipient of the new keys via a portable device during an unlocking, by this portable device, of the lock coupled to this recipient secured module; and
- upon reception of this message, the secured module:
i) updates the keys memorized in the memory of the secured module or, respectively,
ii) recalculates the new keys based on the modifying function identifier received, and updates the keys memorized in the memory of the secured module with the so-calculated keys.

2. The method of claim 1, wherein the software code of said modifying functions is memorized in a micro-software of the secured module.

3. The method of claim 1, wherein the selection by the management site of a key from said memorized list of keys is a pseudo-random selection.

4. The method of claim 1, wherein the encryption key identifier (Kⱼ) is contained in a non-encrypted field (30) of the message, or encrypted according to a predetermined mode, known by the secured module.

5. The method of claim 1, wherein:
- the management site (10) and the secured module (20) each memorize (14, 24) a corresponding plurality of encryption algorithms;
- for the encryption of step a2), the management site operates a previous selection of an algorithm from said plurality of algorithms memorized by the management site;
- the message generated at step a3) further contains an encryption algorithm identifier (ALi), identifying the algorithm used for the encryption at step a2); and
- the step d) comprises a step of previous reading of the algorithm identifier, and the decryption of step d1) is operated with the algorithm identified by said reading, selected from said plurality of algorithms memorized by the secured module.

6. The method of claim 5, wherein the encryption algorithm identifier (ALi) is contained in a non-encrypted field (30) of the message, or encrypted according to a predetermined mode, known by the secured module.

7. The method of claim 1, wherein a date of expiry is associated with each encryption key, and an updating process is automatically initiated by the management site at least for said encryption key before said date of expiry.

8. The method of claim 1, wherein:
- it is further provided steps of:
• generation by the management site, for a specific portable device, of a packet comprising a plurality of said messages,
• transmission of this packet to this portable device, and
• storage of the packet in a memory of the portable device;
- the messages comprised in a same packet are all different from each other and each contain:
• an identifier for a lock device whose opening is allowed by said specific portable device, and
• a sequencing marker associated with this lock device, and
- the analysis of step d) comprises a checking:
• of the fact that the message transmitted to the secured module by the portable device corresponds effectively to the lock device actually coupled to this secured module, and
• of the coherence of the sequencing marker contained in this message with a sequence number memorized in the secured module and constituting said internal reference.

9. The method of claim 8, further comprising, in case of message recognized as compliant at step d2), a step of:
e) updating the sequence number memorized in the secured module, as a function of the sequencing marker contained in the message received.

10. The method of claim 8, further comprising, in case of message recognized as compliant at step d2), a step of:
f) if a previous authorization relating to a prior user is stored in the secured module, invalidation of this authorization.
